# EUROPÄISCHE PATENTSCHRIFT

(11) **EP 4 374 979 B1**
(45) Veröffentlichungstag und Bekanntmachung des Hinweises auf die Patenterteilung: **08.04.2026**
(21) Anmeldenummer: 22208703.3
(22) Anmeldetag: 22.11.2022
(51) Int. Cl.: B09B 3/40, B09C 1/06, B09B 101/90

(54) **VORRICHTUNG UND VERFAHREN ZUM BEHANDELN VON BODENMATERIAL**
APPARATUS AND METHOD FOR TREATING SOIL MATERIAL
DISPOSITIF ET PROCÉDÉ DE TRAITEMENT DE MATÉRIAU DE SOL

(43) Veröffentlichungstag der Anmeldung: 29.05.2024
(73) Patentinhaber: Nehlsen AG, 28237 Bremen (DE)
(72) Erfinder: Rausch, Sven, 28211 Bremen (DE); Bastuck, Kai, 53913 Swisttal (DE)
(74) Vertreter: Eisenführ Speiser

(56) Entgegenhaltungen:
- EP-A1- 0 393 231
- CN-U- 216 150 664
- CN-U- 216 460 831
- DE-A1- 2 550 142
- DE-A1- 3 706 684
- JP-A- 2003 194 319
- JP-A- H10 267 535

## Beschreibung

Die Erfindung betrifft eine Vorrichtung zum Behandeln von Bodenmaterial gemäß dem Oberbegriff von Anspruch 1 sowie ein Verfahren zum Behandeln von Bodenmaterial, insbesondere mittels einer erfindungsgemäßen Vorrichtung.

Schadorganismen wie z.B. Kartoffelzystennematoden stellen ertragsmindernde Faktoren in der Landwirtschaft dar. Die Ausbreitung von Kartoffelzystennematoden erfolgt über "verseuchte" Erde, die unter anderem durch Bearbeitungsgeräte in der Landwirtschaft verschleppt wird. Dabei kann dieser Schadorganismus ohne eine Wirtspflanze als Zyste bis zu 20 Jahre im Boden überdauern. Durch entsprechende Stoffe in den Wurzeln von Wirtpflanzen erfolgt eine Aktivierung der Zysten, wodurch die Larven schlüpfen. Bodenmaterial, welches mit Schadorganismen verseucht sein kann, ist nachfolgend auch als "Resterde" bezeichnet.

Diese Problematik betrifft neben den landwirtschaftlichen Betrieben ebenfalls die weiterverarbeitende Industrie, insbesondere die im industriellen Bereich noch anhaftende Erde, die sogenannte Resterde. Mit Schadorganismen verseuchtes Bodenmaterial bedarf einer Behandlung. Sofern derartiges Bodenmaterial auf landwirtschaftliche Flächen zurückgebracht wird, stellt diese ein erhebliches Risiko aufgrund einer möglichen Belastung mit den Schadorganismen dar. Resterde fällt zum Beispiel bei Kartoffeln an bzw. haftet an den Kartoffeln, wobei in der Regel eine vorherige vollständige Wäsche der Kartoffeln beim abgebenden Betrieb nicht erfolgt.

In der weiteren Verarbeitung der Kartoffeln fallen diese Resterden an unterschiedlichen Stellen in der Verarbeitung sowie in unterschiedlicher Form an. In Abhängigkeit von der Witterung kann die Resterde dabei als Trockenmasse oder, für gewöhnlich in geringerer Menge, in Form von Schlamm vorliegen. Die anfallenden mitunter großen Mengen müssen von den weiterverarbeitenden Industriebetrieben abgeführt werden. Dies erfolgt in der Regel durch die Deponierung bzw. die Ausbringung auf nicht landwirtschaftlich genutzten Flächen. Hierdurch wird einerseits sukzessive Boden der Landwirtschaft entzogen und andererseits das ursprüngliche Risiko des Befalls mit den erwähnten Schadorganismen lediglich verlagert. Es kann folglich unter anderem zu langfristigen Bodenschäden bzw. Schäden in der Landwirtschaft kommen.

Eine mögliche Lösung dieser Problemstellung stellt die Dekontamination der Resterden dar. Hierfür existiert bislang keine etablierte technologische Lösung am Markt.

JP H 10 267535 A, DE 37 06 684 A1 oder JP 2003 194319 A offenbaren jeweils Vorrichtungen zur Behandlung von Bodenmaterial mit wenigstens einer als Drehrohrofen ausgebildeten Behandlungskammer.

DE 25 50 142 A1 zeigt_eine Vorrichtung zum Behandeln von Feststoffen enthaltenden Schlämmen oder Abwässern, welche eine in einem Gehäuse drehbar aufgenommene Rohrschnecke aufweist. EP 0 393 231 A1 offenbart eine Vorrichtung zum Behandeln medizinischer Sonderabfälle.

Aus CN 216 150 664 U ist eine rotierende thermische Desorptionsvorrichtung zur thermischen Desorption von organisch kontaminierten Böden bekannt. Die Vorrichtung umfasst einen Rohrofen zum Aufnehmen von zu behandelndem Bodenmaterial. An einem Ende des Rohrofens ist ein Beschickungskasten und am entgegengesetzten Ende ein Abgasdesorptionskasten angeordnet. Vor dem Übergang in den Abgasdesorptionskasten ist eine Austragsöffnung an der Unterseite des Rohrofens ausgebildet. Im Inneren des Rohrofens ist eine Förderschnecke angeordnet.

CN 216 460 831 U zeigt einen rotierenden thermischen Desorptionsofen zum Behandeln von mit Schadstoffen kontaminierten Böden. Der Desorptionsofen umfasst einen Ofenkörper, der auf einem Drehantrieb drehbar gelagert ist. Der Ofenkörper weist eine Desorptionskammer zum Behandeln des über einen Beschickungstrichter eingeleiteten Bodens auf. Innerhalb der Desorptionskammer ist eine Drehwelle mit Klingen vorgesehen, mittels derer das Bodenmaterial zum Auslass der Desorptionskammer bewegt wird.

Aufgabe der vorliegenden Erfindung ist es, eine Vorrichtung sowie ein zugehöriges Verfahren bereitzustellen, bei denen eine entsprechende Dekontamination von Bodenmaterial, beispielsweise Resterden, zur Abtötung von Schadorganismen erfolgt, wobei die Vorrichtung zur Behandlung entsprechend der in der Landwirtschaft üblicherweise anfallenden Mengen an Bodenmaterial wie zum Beispiel Resterden dimensioniert ist.

Die Vorrichtung löst die Aufgabe dadurch, dass im Inneren der länglichen Behandlungskammer eine Förderschnecke angeordnet ist, die dazu eingerichtet ist, das Bodenmaterial von dem Einlass zum Auslass zu befördern, und die weiterhin dazu eingerichtet ist, das Bodenmaterial zu durchmischen (Anspruch 1).

Erfindungsgemäß bewirkt die Förderschnecke, dass das Bodenmaterial durch die Behandlungskammer hindurch transportiert und dabei durch die Heizeinrichtung erwärmt wird, um die gewünschte Dekontamination des Bodenmaterials zu erreichen. Dabei ist die Förderschnecke durch ihren Aufbau in der Lage, die Erde zu durchmischen. Die Durchmischung bewirkt eine gleichmäßige Erwärmung des Bodenmaterials während des Transports durch die Behandlungskammer. Die Temperatur innerhalb der Behandlungskammer liegt dabei vorzugsweise bei 175°C. Die Förderschnecke dreht sich mit einer Geschwindigkeit von vorzugsweise ca. 0,7 bis 2 Umdrehungen pro Minute. Gemäß der Erfindung weist die Vorrichtung am Auslass einen Gegendruckkörper auf, der dazu eingerichtet ist, den Druck innerhalb der Behandlungskammer zu erhöhen. Dabei werden Druckwerte von vorzugsweise 1,7 bis 2,5 bar erreicht.

Gemäß einer Weiterbildung der Erfindung weist die Vorrichtung am Einlass einen Trichter zum Befüllen der Behandlungskammer mit dem Bodenmaterial auf. Der kontinuierliche Betrieb mit einem kontinuierlichen Befüllen wir hierdurch erleichtert.

Erfindungsgemäß ist die längliche Behandlungskammer ein Rohrofen. Vorzugsweise ist die längliche Behandlungskammer ein Drehrohrofen. Bei einem sich drehenden Ofen kann ein gleichmäßigerer Wärmeeintrag in das Bodenmaterial bei einer verbesserten Vermischung erreicht werden.

Gemäß einer Weiterbildung der Erfindung weist die Behandlungskammer Heizrohre und/oder einen Doppelmantel zum Befüllen mit einem Wärmeträger auf. Dabei wird oftmals die gesamte Behandlungskammer von den Rohren bzw. dem Doppelmantel ummantelt, sodass eine großflächige Beheizung in der Behandlungskammer erfolgt.

Gemäß einer Weiterbildung der Erfindung weist die Vorrichtung einen Wärmeträgerkreislauf auf, der dazu eingerichtet ist, erwärmten Wärmeträger durch eine Leitung dem Doppelmantel zuzuführen und kälteren Wärmeträger durch eine Leitung aus dem Doppelmantel wieder abzuführen sowie den kälteren Wärmeträger mittels einer Heizung wieder zu erwärmen und dem Doppelmantel erneut zuzuführen.

Gemäß einer Weiterbildung der Erfindung ist die Förderschnecke ohne Welle ausgebildet. Hierdurch kann eine effektivere Durchmischung des Bodenmaterials erreicht werden.

Gemäß einer Weiterbildung der Erfindung weist die Vorrichtung mindestens eine Zuführleitung oder mindestens ein Reservoir auf, das dazu eingerichtet ist, Wasser, vorzugsweise gasförmiges Wasser, der Behandlungskammer zuzuführen. Die Zufuhr von Wasser erhöht die Feuchtigkeit in dem Bodenmaterial und ermöglicht die Erzeugung von Dampf innerhalb der Behandlungskammer.

Gemäß einer Weiterbildung der Erfindung weist die Vorrichtung mindestens einen Temperaturfühler auf, der dazu eingerichtet ist, die Temperatur innerhalb der Behandlungskammer zu messen.

Gemäß einer Weiterbildung der Erfindung weist die Vorrichtung mindestens einen Drucksensor auf, der dazu eingerichtet ist, den Druck innerhalb der Behandlungskammer zu messen.

Gemäß einer Weiterbildung der Erfindung weist die Vorrichtung einen Wärmeübertrager auf, der dazu eingerichtet ist, Energie aus dem erwärmten Gas der Behandlungskammer und dem erwärmten Bodenmaterial zurückzugewinnen. Hierdurch können die Betriebskosten der Vorrichtung reduziert werden.

Gemäß einer Weiterbildung der Erfindung weist die Vorrichtung eine Mikrowellenstrecke auf, die innerhalb der Behandlungskammer angeordnet ist und die dazu eingerichtet ist, das Bodenmaterial mit Mikrowellen zu behandeln. Die parallele Behandlung mit Mikrowellen kann dabei die Effektivität bei der Erwärmung und/oder Dekontamination erhöhen.

Die Erfindung löst die Aufgabe in einem zweiten Aspekt mit einem Verfahren zum Behandeln von Bodenmaterial mittels einer Vorrichtung, insbesondere mittels einer Vorrichtung wie vorstehend beschrieben, umfassend die folgenden Schritte:
- Aufnehmen von Bodenmaterial in einer länglichen Behandlungskammer, wobei die Behandlungskammer einen Einlass und einen Auslass aufweist
- Erwärmen des Inneren der Behandlungskammer mittels einer Heizeinrichtung
- Befördern des Bodenmaterials von dem Einlass zum Auslass und Durchmischen des Bodenmaterials mittels einer Förderschnecke, die in der länglichen Behandlungskammer angeordnet ist, und
- Erhöhen des Druckes innerhalb der Behandlungskammer mittels eines Gegendruckkörpers am Auslass (Anspruch 12).

Gemäß einer Weiterbildung des erfindungsgemäßen Verfahrens umfasst das Verfahren weiterhin einen oder mehrere der Schritte:
- Befüllen der Behandlungskammer mit dem Bodenmaterial mittels eines Trichters am Einlass der Vorrichtung
- Befüllen eines Doppelmantels der Behandlungskammer mit einem Wärmeträger
- Zuführen von erwärmtem Wärmeträger durch eine Leitung in den Doppelmantel und Abführen von kälterem Wärmeträger durch eine Leitung aus dem Doppelmantel sowie Erwärmen des kälteren Wärmeträgers mittels einer Heizung und erneutes Zuführen des Wärmeträgers in den Doppelmantel mittels eines Wärmeträgerkreislaufs
- Zuführen von Wasser, vorzugsweise gasförmiges Wasser, in die Behandlungskammer mittels mindestens einer Zuführleitung oder mindestens eines Reservoirs
- Messen der Temperatur innerhalb der Behandlungskammer mittels mindestens eines Temperaturfühlers
- Zurückgewinnen von Energie aus dem erwärmten Gas der Behandlungskammer und dem erwärmten Bodenmaterial mittels eines Wärmeüberträgers
- Behandeln des Bodenmaterials mit Mikrowellen mittels einer Mikrowellenstrecke, die innerhalb der Behandlungskammer angeordnet ist.

Die Erfindung ist nachstehend anhand bevorzugter Ausführungsbeispiele näher erläutert. Hierbei zeigen:
- Fig.1: ein erstes erfindungsgemäßes Ausführungsbeispiel in einer schematischen Seitenansicht
- Fig.2: ein Ausführungsbeispiel zu einem Verfahren zur kontinuierlichen thermischen Behandlung von Schüttgütern in einer schematischen Seitenansicht

Elemente mit gleicher Struktur und/oder gleicher Funktion sind in den Figuren jeweils mit demselben Bezugszeichen versehen.

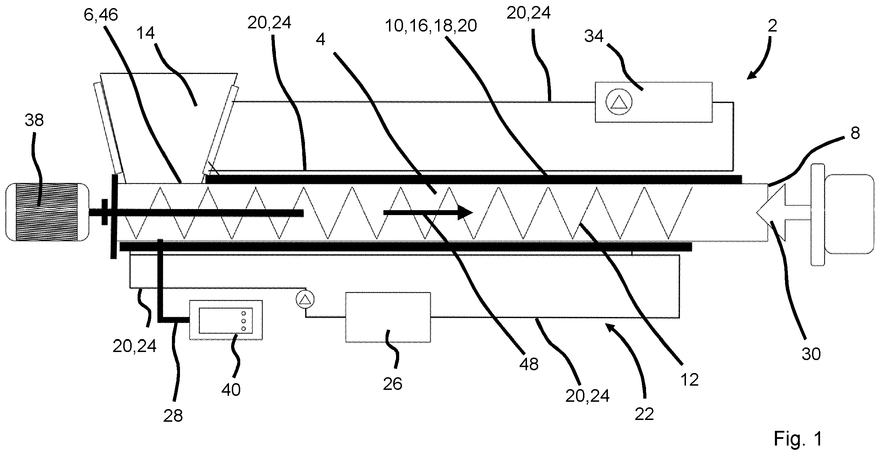

Die in Fig.1 gezeigte Vorrichtung 2 dient erfindungsgemäß dem Behandeln von Bodenmaterial und weist zum einen eine längliche Behandlungskammer 4 zum Aufnehmen des Bodenmaterials auf. Die Behandlungskammer 4 ist im Wesentlichen durch eine vorzugsweise aus Metall bestehende Wand ausgebildet und kann beispielsweise aus einem zylindrischen Rohr gebildet sein; auch andere Formen der Behandlungskammer 4 sind möglich. Die Behandlungskammer 4 weist einen Einlass 6 und einen Auslass 8 auf. Im Ausführungsbeispiel ist die Behandlungskammer 4 mit ihrer Längsachse im Wesentlichen horizontal ausgerichtet; es ist aber auch alternativ bevorzugt, wenn die Behandlungskammer 4 so angeordnet ist, dass die Längsachse geneigt ist in einem spitzen Winkel gegenüber einer horizontalen Linie.

Zudem weist die Vorrichtung eine Heizeinrichtung 10 und eine Förderschnecke 12 auf. Die Heizeinrichtung 10 ist dazu eingerichtet, das Innere der Behandlungskammer zu erwärmen. Die Heizeinrichtung 10 kann als eine elektrische Heizung, eine Dampfheizung, eine Ölheizung mit Öl als Wärmeträgermedium oder dergleichen ausgebildet sein und ist so eingerichtet, dass Wärmeenergie in das Innere der Behandlungskammer 4 eingebracht werden kann.

Die Förderschnecke 12 ist dazu eingerichtet, das Bodenmaterial von dem Einlass 6 zum Auslass 8 in die Förderrichtung 48 zu befördern und das Bodenmaterial zu durchmischen. Die im Inneren der Behandlungskammer 4 angeordnete Förderschnecke 12 ist in an sich bekannter Weise mittels einer Antriebseinrichtung, im Ausführungsbeispiel mittels eines Schneckenantriebs 38, angetrieben. Der Schneckenantrieb 38 weist vorzugsweise einen Elektromotor auf sowieso ein nachgeordnetes Getriebe, welches seinerseits mit der Förderschnecke 12 gekoppelt ist.

Die Vorrichtung 2 weist am Einlass 6 einen Trichter 14 zum Befüllen der Behandlungskammer 4 mit dem Bodenmaterial auf. Der Trichter weist am Boden ein Sieb 46 auf, durch das der Eintrag von größeren Steinen verhindert wird. Die längliche Behandlungskammer 4 ist als Rohrofen ausgeführt. Dabei weist die Behandlungskammer 4 einen Doppelmantel 18 zum Befüllen mit einem Wärmeträger 20 auf. Zudem weist die Vorrichtung einen Wärmeträgerkreislauf 22 auf, der dazu eingerichtet ist, erwärmten Wärmeträger 20 durch eine Leitung 24 dem Doppelmantel 18 zuzuführen und kälteren Wärmeträger 20 durch eine Leitung 24 aus dem Doppelmantel 18 wieder abzuführen sowie den kälteren Wärmeträger 20 mittels einer Heizung 26 wieder zu erwärmen und dem Doppelmantel 18 erneut zuzuführen.

Bei dem in Fig.1 gezeigten Ausführungsbeispiel ist die Förderschnecke 12 ohne Welle ausgebildet. Die Förderschnecke 12 wird über den Schneckenantrieb 38 angetrieben. In einem kontinuierlichen Prozess wird das Bodenmaterial somit von dem Trichter 14 bzw. Einlass 6 mittels der Förderschnecke 12 durch den Rohrofen bzw. die Behandlungskammer 4 bis zum Auslass 8 geführt und dabei erwärmt und durchmischt.

Die Vorrichtung 2 weist zudem eine Zuführleitung 28 auf, die dazu eingerichtet ist, gasförmiges Wasser der Behandlungskammer 4 zuzuführen. Erzeugt wird das gasförmige Wasser im Dampfaggregat 40. Am Auslass weist die Vorrichtung 2 einen Gegendruckkörper 30 auf, der dazu eingerichtet ist, den Druck p innerhalb der Behandlungskammer 4 zu erhöhen.

Weiterhin weist die Vorrichtung 2 einen Wärmeübertrager 34 auf, der dazu eingerichtet ist, Energie aus dem erwärmten Gas der Behandlungskammer 4 und dem erwärmten Bodenmaterial zurückzugewinnen. Dabei ist der Wärmeübertrager 34 über verschiedene Leitungen 24 mit verschiedenen Bereichen der Vorrichtung 2 bzw. mit dem Wärmeträgerkreislauf 22 verbunden.

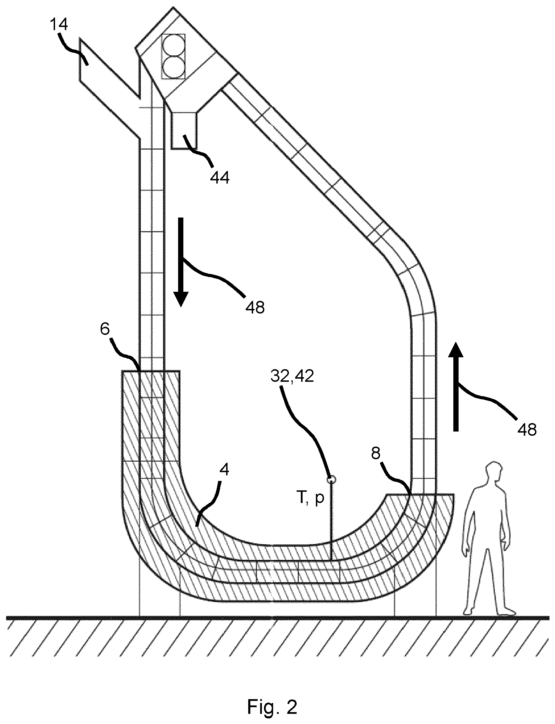

Fig.2 zeigt ein Ausführungsbeispiel zu einem Verfahren zur kontinuierlichen thermischen Behandlung von Schüttgütern in einem Rohrkettenförderer. Die zugehörige Vorrichtung weist dabei einen Einlass 6, einen Auslass 8 sowie eine Behandlungskammer 4 auf. Die Schüttgüter werden über den Trichter 14 in die Vorrichtung gegeben und in die Förderrichtung 48 durch die Behandlungskammer 4 transportiert. Am Auslass 44 wird das Bodenmaterial von der Vorrichtung wieder abgegeben. Die Temperatur T und der Druck p werden über entsprechende Sensoren 32 und 42 gemessen.

Die gezeigte Vorrichtung 2 ist in der Lage, das erfindungsgemäße Verfahren zum Behandeln von Bodenmaterial auszuführen. Die Betriebsweise bzw. das Verfahren weisen folgende Schritte auf
- Aufnehmen von Bodenmaterial in einer länglichen Behandlungskammer 4, wobei die Behandlungskammer 4 einen Einlass 6 und einen Auslass 8 aufweist
- Erwärmen des Inneren der Behandlungskammer 4 mittels einer Heizeinrichtung 10
- Befördern des Bodenmaterials von dem Einlass 6 zum Auslass 8 und Durchmischen des Bodenmaterials mittels einer Förderschnecke 12, die in der länglichen Behandlungskammer 4 angeordnet ist.

Bevorzugt ist das Verfahren wie folgt weitergebildet:
- Befüllen der Behandlungskammer 4 mit dem Bodenmaterial mittels eines Trichters 14 am Einlass 6 der Vorrichtung 2
- Befüllen eines Doppelmantels 18 der Behandlungskammer 4 mit einem Wärmeträger 20
- Zuführen von erwärmtem Wärmeträger 20 durch eine Leitung 24 in den Doppelmantel 18 und Abführen von kälterem Wärmeträger 20 durch eine Leitung 24 aus dem Doppelmantel 18 sowie Erwärmen des kälteren Wärmeträgers 20 mittels einer Heizung 26 und erneutes Zuführen des Wärmeträgers 20 in den Doppelmantel 18 mittels eines Wärmeträgerkreislaufs 22
- Zuführen von Wasser, vorzugsweise gasförmiges Wasser, in die Behandlungskammer 4 mittels mindestens einer Zuführleitung 28 oder mindestens eines Reservoirs
- Erhöhen des Druckes p innerhalb der Behandlungskammer 4 mittels eines Gegendruckkörpers 30 am Auslass
- Messen der Temperatur T innerhalb der Behandlungskammer 4 mittels mindestens eines Temperaturfühlers 32
- Zurückgewinnen von Energie aus dem erwärmten Gas der Behandlungskammer 4 und dem erwärmten Bodenmaterial mittels eines Wärmeüberträgers 34
- Behandeln des Bodenmaterials mit Mikrowellen mittels einer Mikrowellenstrecke, die innerhalb der Behandlungskammer 4 angeordnet ist.

### Bezugszeichenliste

- 2: Vorrichtung
- 4: Behandlungskammer
- 6: Einlass
- 8: Auslass
- 10: Heizeinrichtung
- 12: Förderschnecke
- 14: Trichter
- 16: Heizrohr
- 18: Doppelmantel
- 20: Wärmeträger
- 22: Wärmeträgerkreislauf
- 24: Leitung
- 26: Heizung
- 28: Zuführleitung
- 30: Gegendruckkörper
- 32: Temperaturfühler
- 34: Wärmeübertrager
- 36: Mikrowellenstrecke
- 38: Schneckenantrieb
- 40: Dampfaggregat
- 42: Drucksensor
- 44: Auslass
- 46: Sieb
- 48: Förderrichtung
- p: Druck
- T: Temperatur

## Patentansprüche

1. Vorrichtung (2) zum Behandeln von verseuchtem Bodenmaterial, welches Schadorganismen enthält,
mit einer länglichen Behandlungskammer (4) zum Aufnehmen von Bodenmaterial, wobei die Behandlungskammer (4) einen Einlass (6) und einen Auslass (8) aufweist, mit einer Heizeinrichtung (10) zum Erwärmen des Inneren der Behandlungskammer (4), wobei die längliche Behandlungskammer (4) ein Rohrofen ist,
wobei im Inneren der Behandlungskammer (4) eine Förderschnecke (12) angeordnet ist, die dazu eingerichtet ist, das Bodenmaterial von dem Einlass (6) zum Auslass (8) zu befördern, und die weiterhin dazu eingerichtet ist, das Bodenmaterial zu durchmischen,
**dadurch gekennzeichnet, dass** die Vorrichtung (2) am Auslass einen Gegendruckkörper (30) aufweist, der dazu eingerichtet ist, den Druck (p) innerhalb der Behandlungskammer (4) zu erhöhen.

2. Vorrichtung nach Anspruch 1,
**dadurch gekennzeichnet, dass** die Vorrichtung (2) am Einlass einen Trichter (14) zum Befüllen der Behandlungskammer (4) mit dem Bodenmaterial aufweist.

3. Vorrichtung nach Anspruch 1 oder 2,
**dadurch gekennzeichnet, dass** die längliche Behandlungskammer (4) ein Drehrohrofen ist.

4. Vorrichtung nach einem der vorstehenden Ansprüche,
**dadurch gekennzeichnet, dass** die Behandlungskammer (4) Heizrohre (16) und/oder einen Doppelmantel (18) zum Befüllen mit einem Wärmeträger (20) aufweist.

5. Vorrichtung nach Anspruch 4,
**dadurch gekennzeichnet, dass** die Vorrichtung einen Wärmeträgerkreislauf (22) aufweist, der dazu eingerichtet ist, erwärmten Wärmeträger (20) durch eine Leitung (24) dem Doppelmantel (18) zuzuführen und kälteren Wärmeträger (20) durch eine Leitung (24) aus dem Doppelmantel (18) wieder abzuführen sowie den kälteren Wärmeträger (20) mittels einer Heizung (26) wieder zu erwärmen und dem Doppelmantel (18) erneut zuzuführen.

6. Vorrichtung nach einem der vorstehenden Ansprüche,
**dadurch gekennzeichnet, dass** die Förderschnecke ohne Welle ausgebildet ist.

7. Vorrichtung nach einem der vorstehenden Ansprüche,
**dadurch gekennzeichnet, dass** die Vorrichtung mindestens eine Zuführleitung (28) oder mindestens ein Reservoir aufweist, das dazu eingerichtet ist, Wasser, vorzugsweise gasförmiges Wasser, der Behandlungskammer (4) zuzuführen.

8. Vorrichtung nach einem der vorstehenden Ansprüche, **dadurch gekennzeichnet, dass** die Vorrichtung (2) mindestens einen Temperaturfühler (32) aufweist, der dazu eingerichtet ist, die Temperatur (T) innerhalb der Behandlungskammer (4) zu messen.

9. Vorrichtung nach einem der vorstehenden Ansprüche, **dadurch gekennzeichnet, dass** die Vorrichtung (2) mindestens einen Drucksensor (42) aufweist, der dazu eingerichtet ist, den Druck (p) innerhalb der Behandlungskammer (4) zu messen.

10. Vorrichtung nach einem der vorstehenden Ansprüche, **dadurch gekennzeichnet, dass** die Vorrichtung (2) einen Wärmeübertrager (34) aufweist, der dazu eingerichtet ist, Energie aus dem erwärmten Gas der Behandlungskammer und dem erwärmten Bodenmaterial zurückzugewinnen.

11. Vorrichtung nach einem der vorstehenden Ansprüche,
**dadurch gekennzeichnet, dass** die Vorrichtung (2) eine Mikrowellenstrecke (36) aufweist, die innerhalb der Behandlungskammer (4) angeordnet ist und die dazu eingerichtet ist, das Bodenmaterial mit Mikrowellen zu behandeln.

12. Verfahren zum Behandeln von verseuchtem Bodenmaterial, welches Schadorganismen enthält, mittels einer Vorrichtung, insbesondere mittels einer Vorrichtung nach einem der vorstehenden Ansprüche, umfassend die folgenden Schritte:
- Aufnehmen von Bodenmaterial in einer länglichen als Rohrofen ausgebildeten Behandlungskammer (4), wobei die Behandlungskammer (4) einen Einlass (6) und einen Auslass (8) aufweist
- Erwärmen des Inneren der Behandlungskammer (4) mittels einer Heizeinrichtung (10)
- Befördern des Bodenmaterials von dem Einlass (6) zum Auslass (8) und Durchmischen des Bodenmaterials mittels einer Förderschnecke (12), die in der länglichen Behandlungskammer (4) angeordnet ist, und
- Erhöhen des Druckes (p) innerhalb der Behandlungskammer (4) mittels eines Gegendruckkörpers (30) am Auslass.

13. Verfahren nach Anspruch 12, weiterhin umfassend einen oder mehrere der Schritte:
- Befüllen der Behandlungskammer (4) mit dem Bodenmaterial mittels eines Trichters (14) am Einlass (6) der Vorrichtung (2)
- Befüllen eines Doppelmantels (18) der Behandlungskammer (4) mit einem Wärmeträger (20)
- Zuführen von erwärmtem Wärmeträger (20) durch eine Leitung (24) in den Doppelmantel (18) und Abführen von kälterem Wärmeträger (20) durch eine Leitung (24) aus dem Doppelmantel (18) sowie Erwärmen des kälteren Wärmeträgers (20) mittels einer Heizung (26) und erneutes Zuführen des Wärmeträgers (20) in den Doppelmantel (18) mittels eines Wärmeträgerkreislaufs (22)
- Zuführen von Wasser, vorzugsweise gasförmiges Wasser, in die Behandlungskammer (4) mittels mindestens einer Zuführleitung (28) oder mindestens eines Reservoirs
- Messen der Temperatur (T) innerhalb der Behandlungskammer (4) mittels mindestens eines Temperaturfühlers (32)
- Zurückgewinnen von Energie aus dem erwärmten Gas der Behandlungskammer (4) und des erwärmten Bodenmaterials mittels eines Wärmeüberträgers (34)
- Behandeln des Bodenmaterials mit Mikrowellen mittels einer Mikrowellenstrecke, die innerhalb der Behandlungskammer (4) angeordnet ist.

## Claims

1. A device (2) for treating contaminated soil material, which contains harmful organisms,
having an elongated treatment chamber (4) for receiving soil material,
wherein the treatment chamber (4) comprises an inlet (6) and an outlet (8),
having a heating device (10) for heating the interior of the treatment chamber (4),
wherein the elongated treatment chamber (4) is a tubular furnace,
wherein in the interior of the treatment chamber (4) a screw conveyor (12) is arranged, which is equipped for conveying the soil material from the inlet (6) to the outlet (8), and which, furthermore, is equipped for mixing through the soil material,
**characterized in that** the device (2) at the outlet comprises a back pressure body (30), which is equipped for increasing the pressure (p) within the treatment chamber (4).

2. The device according to Claim 1,
**characterised in that** the device (2) at the inlet comprises a funnel (14) for charging the treatment chamber (4) with the soil material.

3. The device according to Claim 1 or 2,
**characterised in that** the elongated treatment chamber (4) is a rotary tubular furnace.

4. The device according to any one of the preceding claims,
**characterized in that** the treatment chamber (4) comprises heating tubes (16) and/or a double jacket (18) for charging with a heat transfer medium (20).

5. The device according to Claim 4,
**characterised in that** the device comprises a heat transfer medium circuit (22), which is equipped for feeding heated heat transfer medium (20) through a line (24) to the double jacket (18) and again discharge colder heat transfer medium (20) through a line (24) from the double jacket (18) and to again heat the colder heat transfer medium (20) by means of a heating device (26) and to again feed the same to the double jacket (18).

6. The device according to any one of the preceding claims,
**characterised in that** the screw conveyor is designed without shaft.

7. The device according to any one of the preceding claims,
**characterised in that** the device comprises at least one feed line (28) or at least one reservoir, which is equipped for feeding water, preferentially gaseous water, to the treatment chamber (4).

8. The device according to any one of the preceding claims,
**characterised in that** the device (2) comprises at least one temperature sensor (32), which is equipped for measuring the temperature (T) within the treatment chamber (4).

9. The device according to any one of the preceding claims,
**characterised in that** the device (2) comprises at least one pressure sensor (42), which is equipped for measuring the pressure (p) within the treatment chamber (4).

10. The device according to any one of the preceding claims,
**characterised in that** the device (2) comprises a heat exchanger (34), which is equipped for recovering energy from the heated gas of the treatment chamber and the heated soil material.

11. The device according to any one of the preceding claims,
**characterised in that** the device (2) comprises a microwave section (36), which is arranged within the treatment chamber (4) and which is equipped for treating the soil material with microwaves.

12. A method for treating contaminated soil material containing harmful organisms by means of a device, in particular, by means of a device according to any one of the preceding claims, including the following steps:
- receiving soil material in an elongated treatment chamber (4) designed as tubular furnace, wherein the treatment chamber (4) comprises an inlet (6) and an outlet (8)
- heating the interior of the treatment chamber (4) by means of a heating device (10)
- conveying the soil material from the inlet (6) to the outlet (8) and mixing through the soil material by means of a screw conveyor (12), which is arranged in the elongated treatment chamber (4), and
- increasing the pressure (p) within the treatment chamber (4) by means of a back pressure body (30) at the outlet.

13. The method according to Claim 12, furthermore, including one or more of the steps:
- charging the treatment chamber (4) with the soil material by means of a funnel (14) at the inlet (6) of the device (2)
- charging a double jacket (18) of the treatment chamber (4) with a heat transfer medium (20)
- feeding heated heat transfer medium (20) through a line (24) into the double jacket (18) and discharging colder heat transfer medium (20) through a line (24) from the double jacket (18) and heating the colder heat transfer medium (20) by means of a heating device (26) and renewed feeding of the heat transfer medium (20) into the double jacket (18) by means of a heat transfer medium circuit (22)
- feeding water, preferentially gaseous water, into the treatment chamber (4) by means of at least one feed line (28) or at least one reservoir
- measuring the temperature (T) within the treatment chamber (4) by means of a temperature sensor (32)
- recovering energy from the heated gas of the treatment chamber (4) and of the heated soil material by means of a heat exchanger (34)
- treating the soil material with microwaves by means of a microwave section, which is arranged within the treatment chamber (4).

## Revendications

1. Dispositif (2) pour le traitement de matériaux de sol contaminés, qui contiennent des organismes nuisibles,
avec une chambre de traitement allongée (4) destinée à recevoir des matériaux de sol, dans lequel la chambre de traitement (4) présente une entrée (6) et une sortie (8), avec un système de chauffage (10) destiné à chauffer l'intérieur de la chambre de traitement (4), dans lequel la chambre de traitement allongée (4) est un four tubulaire,
dans lequel une vis sans fin de transport (12) est disposée à l'intérieur de la chambre de traitement (4), laquelle est configurée pour transporter les matériaux de sol de l'entrée (6) vers la sortie (8), et qui est en outre configurée pour mélanger les matériaux de sol,
**caractérisé en ce que** le dispositif (2) présente, sur la sortie, un corps de contre-pression (30) qui est configuré pour augmenter la pression (p) à l'intérieur de la chambre de traitement (4).

2. Dispositif selon la revendication 1,
**caractérisé en ce que** le dispositif (2) présente, sur l'entrée, un entonnoir (14) de remplissage de la chambre de traitement (4) avec les matériaux de sol.

3. Dispositif selon la revendication 1 ou 2,
**caractérisé en ce que** la chambre de traitement allongée (4) est un four à tube rotatif.

4. Dispositif selon l'une quelconque des revendications précédentes,
**caractérisé en ce que** la chambre de traitement (4) présente des tubes chauffants (16) et/ou une double enveloppe (18) pour le remplissage avec un caloporteur (20).

5. Dispositif selon la revendication 4,
**caractérisé en ce que** le dispositif présente un circuit caloporteur (22) qui est configuré pour amener, par une conduite (24), un caloporteur (20) chauffé à la double enveloppe (18) et évacuer à nouveau, par une conduite (24), un caloporteur (20) plus froid hors de la double enveloppe (18) ainsi que pour réchauffer le caloporteur (20) plus froid au moyen d'un chauffage (26) et l'amener à nouveau à la double enveloppe (18).

6. Dispositif selon l'une quelconque des revendications précédentes,
**caractérisé en ce que** la vis sans fin de transport est réalisée sans arbre.

7. Dispositif selon l'une quelconque des revendications précédentes,
**caractérisé en ce que** le dispositif présente au moins une conduite d'amenée (28) ou au moins un réservoir qui est configuré pour amener de l'eau, de préférence de l'eau gazeuse, à la chambre de traitement (4).

8. Dispositif selon l'une quelconque des revendications précédentes, **caractérisé en ce que** le dispositif (2) présente au moins un capteur de température (32) qui est configuré pour mesurer la température (T) à l'intérieur de la chambre de traitement (4).

9. Dispositif selon l'une quelconque des revendications précédentes, **caractérisé en ce que** le dispositif (2) présente au moins un capteur de pression (42) qui est configuré pour mesurer la pression (p) à l'intérieur de la chambre de traitement (4).

10. Dispositif selon l'une quelconque des revendications précédentes, **caractérisé en ce que** le dispositif (2) présente un échangeur de chaleur (34) qui est configuré pour récupérer de l'énergie à partir du gaz chauffé de la chambre de traitement et des matériaux de sol chauffés.

11. Dispositif selon l'une quelconque des revendications précédentes,
**caractérisé en ce que** le dispositif (2) présente une ligne de micro-ondes (36) qui est disposée à l'intérieur de la chambre de traitement (4) et qui est configurée pour traiter les matériaux de sol avec des micro-ondes.

12. Procédé de traitement de matériaux de sol contaminés qui contiennent des organismes nuisibles, au moyen d'un dispositif, en particulier au moyen d'un dispositif selon l'une quelconque des revendications précédentes, comprenant les étapes suivantes :
- la réception de matériaux de sol dans une chambre de traitement (4) allongée réalisée comme un four tubulaire, dans lequel la chambre de traitement (4) présente une entrée (6) et une sortie (8)
- le chauffage de l'intérieur de la chambre de traitement (4) au moyen d'un système de chauffage (10)
- le transport des matériaux de sol de l'entrée (6) vers la sortie (8) et le mélange des matériaux de sol au moyen d'une vis sans fin de transport (12) qui est disposée dans la chambre de traitement allongée (4), et
- l'augmentation de la pression (p) à l'intérieur de la chambre de traitement (4) au moyen d'un corps de contre-pression (30) sur la sortie.

13. Procédé selon la revendication 12, comprenant par ailleurs une ou plusieurs des étapes :
- de remplissage de la chambre de traitement (4) avec les matériaux de sol au moyen d'un entonnoir (14) sur l'entrée (6) du dispositif (2)
- de remplissage d'une double enveloppe (18) de la chambre de traitement (4) avec un caloporteur (20)
- d'amenée, dans la double enveloppe (18), du caloporteur (20) chauffé par une conduite (24) et d'évacuation, par une conduite (24), du caloporteur (20) plus froid hors de la double enveloppe (18) ainsi que de chauffage du caloporteur (20) plus froid au moyen d'un chauffage (26) et d'amenée à nouveau du caloporteur (20) dans la double enveloppe (18) au moyen d'un circuit caloporteur (22)
- d'amenée d'eau, de préférence d'eau sous forme gazeuse, dans la chambre de traitement (4) au moyen d'au moins une conduite d'amenée (28) ou d'au moins un réservoir
- de mesure de la température (T) à l'intérieur de la chambre de traitement (4) au moyen d'au moins un capteur de température (32)
- de récupération d'énergie à partir du gaz chauffé de la chambre de traitement (4) et des matériaux de sol chauffés au moyen d'un échangeur de chaleur (34)
- de traitement des matériaux de sol par micro-ondes au moyen d'une ligne de micro-ondes qui est disposée à l'intérieur de la chambre de traitement (4).
